# EUROPÄISCHE PATENTANMELDUNG

(11) **EP 2 923 750 A2**
(43) Veröffentlichungstag der Anmeldung: **30.09.2015**
(21) Anmeldenummer: 15157635.2
(22) Anmeldetag: 04.03.2015
(51) Int. Cl.: B01D 41/00

(54) **Verfahren**

(30) Priorität: 14.03.2014 DE 102014003507
(71) Anmelder: Carl Freudenberg KG, 69469 Weinheim (DE)
(72) Erfinder: Stößer, Thomas, 68519 Viernheim (DE); Fickartz, Knuth, 69250 Schönau (DE)

(57) **Zusammenfassung**

Ein Verfahren, umfassend die nachfolgenden Schritte:
- Versenden eines gebrauchten Filterelements (1) an einen Regenerierort (2),
- Regenerieren des gebrauchten Filterelements (1), um dieses in einen betriebstauglichen Zustand zu verbringen, und
- Verbringen des regenerierten Filterelements (1') an seinen Einsatzort (3),

löst die Aufgabe, ein Verfahren anzugeben, mit welchem gebrauchte Filterelemente derart behandelt werden können, dass eine Umweltbelastung minimiert ist.

## Beschreibung

### Technisches Gebiet

Die Erfindung betrifft ein Verfahren.

### Stand der Technik

Aus der DE 10 2008 057 300 A1 ist bereits ein Filterelement bekannt, welches einen Faltenbalg aus einem Vliesstoff aufweist. Solche Filterelemente können unter anderem in Kraftfahrzeugen verwendet werden, wo sie in geeignete Gehäuse eingesetzt werden.

Im Zuge von Serviceuntersuchungen werden solche Filterelemente aus dem Gehäuse herausgenommen und optisch begutachtet. Sofern die Filterelemente derart mit Schmutz beladen sind, dass ein betriebstauglicher Einsatz nicht mehr möglich ist, werden diese üblicherweise entsorgt.

Hierzu sind technische Mittel notwendig, um die Filterelemente beispielsweise zu verbrennen. Durch das Verbrennen kann die Umwelt jedoch belastet werden. Durch den Einsatz technischer Mittel zur Entsorgung entstehen Kosten.

### Darstellung der Erfindung

Der Erfindung liegt daher die Aufgabe zu Grunde, ein Verfahren anzugeben, mit welchem gebrauchte Filterelemente derart behandelt werden können, dass eine Umweltbelastung minimiert ist.

Erfindungsgemäß wird die voranstehende Aufgabe mit den Merkmalen des Patentanspruchs 1 gelöst.

Erfindungsgemäß ist erkannt worden, dass durch das Regenerieren eines gebrauchten Filterelements die Umwelt geschont wird. Ein gebrauchtes Filterelement kann unter Einsatz einer geeigneten Logistikkette an einen Ort verbracht werden, an dem es in fachmännischer und qualifizierter Weise regeneriert wird. Nach der Regenerierung wird das wieder betriebstaugliche Filterelement an seinen Einsatzort verbracht, wo es wieder verbaut werden kann. Insoweit ist ein Verfahren angegeben, mit welchem gebrauchte Filterelemente derart behandelt werden können, dass eine Umweltbelastung minimiert ist. Des Weiteren werden Kosten für die Entsorgung alter Filterelemente und Kosten für die Neuanschaffung neuer Filterelemente eingespart.

Folglich ist die eingangs genannte Aufgabe gelöst.

Ein Adsorptionsfilterelement oder ein Gasfilterelement könnte regeneriert werden. Diese Filtertypen werden eingesetzt, um Personen zu schützen, die in Fahrerkabinen von Kraftfahrzeugen sitzen. Sobald die Adsorptionsmittel eines solchen Filterelements zu stark beladen sind, ist ein Personenschutz nicht mehr möglich.

Als Filterelement könnte ein Adsorptionsfilterelement verwendet werden, welches als Adsorptionsmittel Aktivkohle und/ oder Zeolithe aufweist. Durch diese Adsorptionsmittel können Stoffe durch Physisorption gebunden werden.

Ein Set zur Durchführung eines Verfahrens der hier beschriebenen Art könnte ein gebrauchtes Filterelement und ein Behältnis zum Versenden des Filterelements an den Regenerierort umfassen. Der Nutzer des Filterelements hätte durch das Set ein Mittel an der Hand, mit dem er das gebrauchte Filterelement zielgerichtet an die richtige Adresse, nämlich den Hersteller des Filterelements, senden könnte. Der Hersteller kann in qualifizierter Weise dafür Sorge tragen, dass das gebrauchte Filterelement fachgerecht wieder in einen betriebstauglichen Zustand verbracht wird.

Das Behältnis könnte gasdicht sein. Hierdurch wird sichergestellt, dass während des Versendens des Filterelements keine gesundheitsschädlichen Gase aus dem Behältnis austreten.

Das Behältnis könnte als Umschlag ausgebildet sein. Ein Umschlag kann das Filterelement problemlos umhüllen und sich der Form des Filterelements anpassen. Ein Umschlag kann mit der Post zum Regenerierort versendet werden. Der Umschlag oder das Behältnis könnte bereits mit der Adresse des Regenerierorts und/ oder des Herstellers versehen sein.

Filterelemente der hier beschriebenen Art können in Agrarfahrzeugen, insbesondere in Traktoren, eingesetzt werden. Des Weiteren ist denkbar, die Filterelemente im Off-Road-, Heavy-Duty-Bereich oder in der Gasphasen-Filtration zu verwenden.

### Kurzbeschreibung der Zeichnung

In der Zeichnung zeigen
- Fig. 1: eine schematische Darstellung eines Verfahrens zum Regenerieren eines gebrauchten Filterelements und
- Fig. 2: eine schematische Darstellung eines Sets, welches ein Behältnis und ein gebrauchtes Filterelement umfasst.

### Ausführung der Erfindung

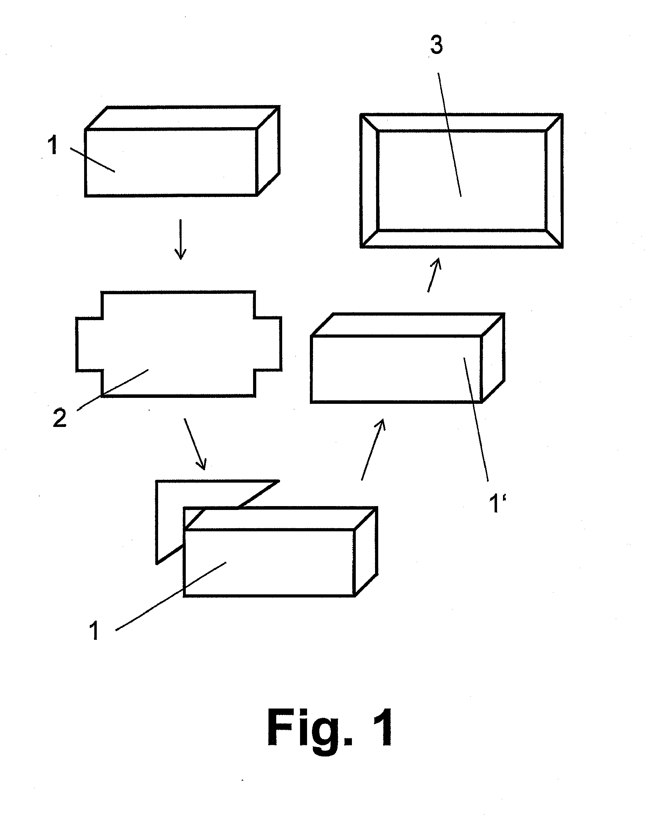

Fig. 1 zeigt in schematischer Darstellung ein Verfahren mit den nachfolgenden Schritten:
Versenden eines gebrauchten Filterelements 1 an einen Regenerierort 2, Regenerieren des gebrauchten Filterelements 1, um dieses in einen betriebstauglichen Zustand zu verbringen, und Verbringen des regenerierten Filterelements 1' an seinen Einsatzort 3.

Konkret wird ein Adsorptionsfilterelement oder ein Gasfilterelement regeneriert. Die Adsorptionsmittel des Filterelements 1, welche Zeolithe und/ oder Aktivkohle umfassen, werden von schädlichen Stoffen weitgehend befreit. Danach ist das regenerierte Filterelement 1' wieder betriebstauglich.

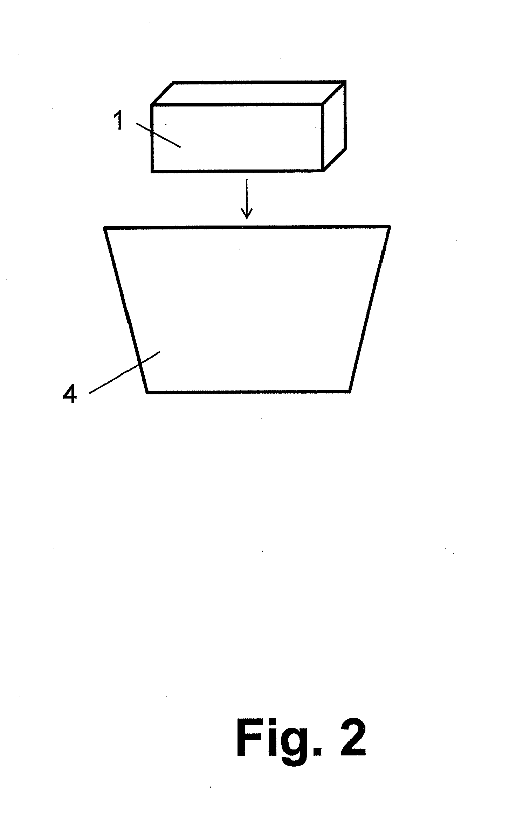

Fig. 2 zeigt ein Set zur Durchführung des in Fig. 1 dargestellten Verfahrens, umfassend ein gebrauchtes Filterelement 1 und ein Behältnis 4 zum Versenden des Filterelements 1 an den Regenerierort 2 und/ oder an den Hersteller des Filterelements 1. Das Behältnis 4 ist gasdicht. Das Behältnis 4 ist als Umschlag ausgebildet.

## Patentansprüche

1. Verfahren, umfassend die nachfolgenden Schritte:
- Versenden eines gebrauchten Filterelements (1) an einen Regenerierort (2),
- Regenerieren des gebrauchten Filterelements (1), um dieses in einen betriebstauglichen Zustand zu verbringen, und
- Verbringen des regenerierten Filterelements (1') an seinen Einsatzort (3).

2. Verfahren nach Anspruch 1, **dadurch gekennzeichnet, dass** ein Adsorptionsfilterelement oder ein Gasfilterelement regeneriert wird.

3. Verfahren nach Anspruch 1 oder 2, **dadurch gekennzeichnet, dass** als Filterelement (1) ein Adsorptionsfilterelement verwendet wird, welches als Adsorptionsmittel Aktivkohle und/ oder Zeolithe aufweist.

4. Set zur Durchführung eines Verfahrens nach einem der voranstehenden Ansprüche, umfassend ein gebrauchtes Filterelement (1) und ein Behältnis (4) zum Versenden des Filterelements (1) an den Regenerierort (2).

5. Set nach Anspruch 4, **dadurch gekennzeichnet, dass** das Behältnis (4) gasdicht ist.

6. Set nach Anspruch 4 oder 5, **dadurch gekennzeichnet, dass** das Behältnis (4) als Umschlag ausgebildet ist.
